**Europäisches Patentamt**

**European Patent Office**

**Office européen des brevets**

(19)

(11) Veröffentlichungsnummer: **0 052 794**
**B1**

# (12) EUROPÄISCHE PATENTSCHRIFT

(45) Veröffentlichungstag der Patentschrift:
11.06.86

(51) Int. Cl.⁴: **G 05 G 9/16, B 60 K 20/02**

(21) Anmeldenummer: **81109151.1**

(22) Anmeldetag: **29.10.81**

(54) **Schaltvorrichtung für den Antrieb eines Nutzfahrzeuges.**

(30) Priorität: **25.11.80 DE 3044311**

(43) Veröffentlichungstag der Anmeldung:
**02.06.82 Patentblatt 82/22**

(45) Bekanntmachung des Hinweises auf die Patenterteilung:
**11.06.86 Patentblatt 86/24**

(84) Benannte Vertragsstaaten:
**AT BE DE FR GB IT NL SE**

(56) Entgegenhaltungen:
**DE - A - 2 547 563**
**DE - B - 1 530 903**
**DE - U - 1 729 967**
**US - A - 3 274 856**

(73) Patentinhaber: **DEERE & COMPANY, 1 John Deere Road, Moline Illinois 61265 (US)**

(72) Erfinder: **Nobis, Dieter, Dipl.-Ing., Waldhofstrasse 204, D-6800 Mannheim (DE)**

(74) Vertreter: **Feldmann, Bernhard et al, DEERE & COMPANY European Office, Patent Department Steubenstrasse 36-42 Postfach 503, D-6800 Mannheim 1 (DE)**

## Beschreibung

Die Erfindung bezieht sich auf eine Schaltvorrichtung für den Antrieb eines Nutzfahrzeuges, insbesondere eines Ackerschleppers, mit einem in zwei Richtungen verstellbaren Schalthebel, der in einer Schaltkulisse geführt ist und bei Verstellung in der einen Richtung ein Mehrstufengetriebe und bei Verstellung aus der dadurch erreichten Schaltstellung in die andere Richtung ein weiteres Getriebe umschaltet.

Diese bekannte Schaltvorrichtung (GB-A- 919 570) besteht aus einer ortsfest angeordneten Schaltkulisse, in der ein Schalthebel in verschiedene Schaltstellungen aus einer Neutralstellung bringbar ist. Die Schaltkulisse ist hierzu aus einem H-förmigen und einem Z-förmigen Schlitz zusammengesetzt, die miteinander in Verbindung stehen, und zwar derart, daß ein senkrechter Steg des H den oberen und den unteren Quersteg des Z miteinander verbindet. Befindet sich der Schalthebel an einem der Enden der senkrechten Stege des H, dann nimmt das Mehrstufengetriebe eine Schaltstellung für einen ersten, zweiten, dritten oder vierten Gang ein, während es eine Neutralstellung einnimmt, wenn sich der Schalthebel in dem Quersteg des H befindet. Nimmt der Schalthebel jedoch eine Stellung an einem der Enden des den oberen und den unteren Quersteg des Z verbindenden senkrechten Steges des H ein, dann kann er in Richtung des oberen bzw. des unteren Quersteges des Z verschwenkt werden, wodurch die Übersetzung in dem weiteren Getriebe geändert wird. Dies bedeutet in der Praxis ein Zuschalten eines Overdrives. Die Zwangsführung ist dabei so gestaltet, daß beim Schalten des Mehrstufengetriebes der Overdrive immer ausgeschaltet werden muß, d. h. ein Umschalten des Mehrstufengetriebes im Overdrive ist nicht möglich. Dabei weisen die Schaltstellungen in Richtung der Querstege jeweils den gleichen Abstand zueinander auf. Befindet sich der Schalthebel allerdings in einer dem H abgelegenen Schaltstellung in einem der Querstege des Z, dann wird bei einer weiteren Verstellung des Schalthebels aus dieser Schaltstellung des Mehrstufengetriebes in eine andere das weitere Getrsebe zwangsläufig in seine ursprünglsche Stellung zurückverstellt.

Aus der DE-A-2 547 563 ist darüber hinaus eine Schaltvorrichtung bekanntgeworden für eine mehrfunktionelle Betätigung für den Antrieb eines Raupenschleppers. Bei seitlicher Verschwenkung des Schalthebels in einem Langloch werden Vorwärtsgang - Leerlauf-Rückwärtsgang über ein ein hydraulisches Lastschalt- und Wendegetriebe beaufschlagendes Schaltsteuerventil bewirkt. Bei in Fahrtrichtung, also nach vorn und hinten, erfolgender Verschwenkung des Schalthebels wird im Vorwärts- oder Rückwärtsbereich auf ein zweites hydraulisches Steuerventil eingewirkt, das die Drehzahlen im Sinne höherer oder geringerer Geschwindigkeit verändert, wobei aus einer Neutralstellung kommend nur von der höheren Geschwindigkeit zu der geringeren geregelt werden kann. Bei dieser letztgenannten Verschwenkung des Schalthebels schwenkt ein Schaltbügel mit einer Langlochschaltkulisse mit, um gleichzeitig mit einem auf einer Seite angebrachten Führungsbolzen auf eine Kurvenschesbe einzuwirken. Zweck und Anordnung dieses zweifunktionalen Schalthebels und -bügels weisen keine weitergehenden Gemeinsamkeiten mit der Erfindung auf.

Die der Erfindung zugrunde liegende Aufgabe wird darin gesehen, diese Schaltvorrichtung so weiterzubilden, daß auf möglichst einfache und übersichtliche Weise sowohl das Mehrstufengetriebe wie auch das weitere Getriebe mit einem einzigen Schalthebel und voneinander unabhängig verstellt werden können.

Diese Aufgabe ist erfindungsgemäß dadurch gelöst worden, daß ein schwenkbar angeordneter Schaltbügel vorgesehen ist, der mit dem weiteren Getriebe derart verbunden ist, daß bei Verschwenken des Schaltbügels das weitere Getriebe umgeschaltet wird, ferner daß der Schaltbügel die Schaltkulisse aufweist, die dem Schaltweg des Mehrstufengetriebes entspricht, und in allen Schaltstellungen des Mehrstufengetriebes über den Schalthebel verschwenkbar ist.

Auf diese Weise ist zum Verstellen des weiteren Getriebes keine Erweiterung der Schaltkulisse erforderlich, weshalb kein zusätzlicher Fertigungsaufwand entsteht und die Schaltkulssse aufgrund ihrer wenigen Schaltstellungen übersichtlich bleibt und bedienungsfreundlich ist. Sse ermöglicht es, daß das Mehrstufengetriebe in jeder Schaltstellung des weiteren Getriebes, das als Overdrive ausgebildet sein kann, aber auch andere Funktionen übernehmen könnte, wie Einkuppeln - Auskuppeln oder Rückwärts - Vorwärts, geschaltet werden kann. Zur Optimierung der Fahrtgeschwindigkeitsabstufungen des Nutzfahrzeuges ist es besonders nützlich, wenn der Schaltbügel in allen Schaltstellungen des Mehrstufengetriebes über den Schalthebel verschwenkbar ist.

Bei einer Schaltvorrichtung für ein aus seinen Schaltstellungen in eine Neutralstellung, d. h. in eine den Kraftfluß unterbrechende Stellung, verstellbares Mehrstufengetriebe ist es von Vorteil, wenn diese so ausgebildet ist, daß Sperrelemente vorgesehen ssnd, über die in der Neutralstellung des Mehrstufengetriebes eine Umschaltung des weiteren Getriebes blockierbar sst, da dann beim Passieren durch die Neutralstellung ein Wechsel des Übersetzungsverhältnisses in dem weiteren Getriebe nicht möglich sst und somit allzugroße Geschwsndigkeitssprünge mit den zuvor genannten bekannten Nachteilen vermieden werden.

Auf besonders einfach 1 Art wird nach einem weiteren Vorschlag gemäß der Erfindung die Beweglichkeit des Schalthebels in der anderen Richtung und somit die Bedienung des weiteren Getriebes bei einer Schaltvorrichtung mit Schaltsegmenten zum Schalten des Mehrstufengetriebes erreicht, indem die Schaltsegment des Mehrstufengetriebes eine Schlitzung aufweisen, die der Schwenkbewegung des Schaltbügels zum Umschalten des weiteren Getriebes entspricht, und daß der Schaltbügel etwa U-förmige Gestalt hat und in seinem etwa waagrecht verlaufenden oberen Steg die Schaltkulisse aufweist und nach unten wessende Schenkel in Lagerachsen verschwenkbar gelagert sind.

Dadurch, daß der Schalthebel in einem Verschwenklager angeordnet ist und die Lagerachsen des Schaltbügels mit dem Verschwenklager eine gemeinsame Fluchtlinie aufweisen, ist eine vernünftige Abstimmung der erforderlichen Schaltwege des Schalthebels in der anderen Richtung zum Verstellen des Mehrstufengetriebes und des weiteren Getriebes gegeben.

Eine vorzügliche Ausführungsform zum Übertragen der Schwenkbewegung des Schaltbügels auf das weitere Getriebe wird erfindungsgemäß dadurch erreicht, daß einer der nach unten weisenden Schenkel des Schaltbügels einen sich seitlich und quer zur Lagerachse erstreckenden Hebelarm aufweist, der mit einem sich beim Verschwenken nach oben oder unten mitbewegenden Schaltgestänge verbunden ist, über das das weitere Getriebe schaltbar ist.

Ein Umschalten des weiteres Getriebes, wenn sich das Mehrstufengetriebe in seiner Neutralstellung befindet, wird nach einem anderen Merkmal der Erfindung ohne großen Fertigungs- und Materialaufwand dadurch verhindert, daß in senkrechtem Abstand unterhalb des Verschwenklagers des Schalthebels die Sperrelemente vorgesehen ssnd, die ein nach oben weisendes vorzugswesse bolzenförmiges Sperrelement aufweisen, das in einem Lager gelagert ist und in Abhängigkeit von der Stellung des Schaltbügels verschwenkbar ist und sn der Neutralstellung gegen esnen Gegenbolzen anliegt, der mit dem Schalthebel im Bereich sesnes Verschwenklagers parallel zur gemeinsamen Fluchtlinie verschwenkbar ist, wobei zwecks Verschwenken des Sperrelementes dieses msttels einer Lasche mit dem Hebelarm verbunden ist.

Im folgenden wird die Erfindung anhand eines Ausführungsbeispieles näher erläutert, aus dem sich weitere Merkmale und Vorteile der Erfindung entnehmen lassen. In der zugehörigen Zeichnung zeigen

Fig. 1 eine perspektivische Ansicht der Schaltvorrichtung, insbesondere der Anordnung des Schalthebels und des Schaltbügels;

Fig. 2 einen Schnitt durch die in Figur 1 gezeigte Schaltvorrichtung;

Fig. 2a einen Schnitt gemäß Figur 2, in verschwenkter Position;

Fig. 3 eine Teilinnenansicht einer Fahrzeugkabine mit eingebauter Schaltvorrichtung.

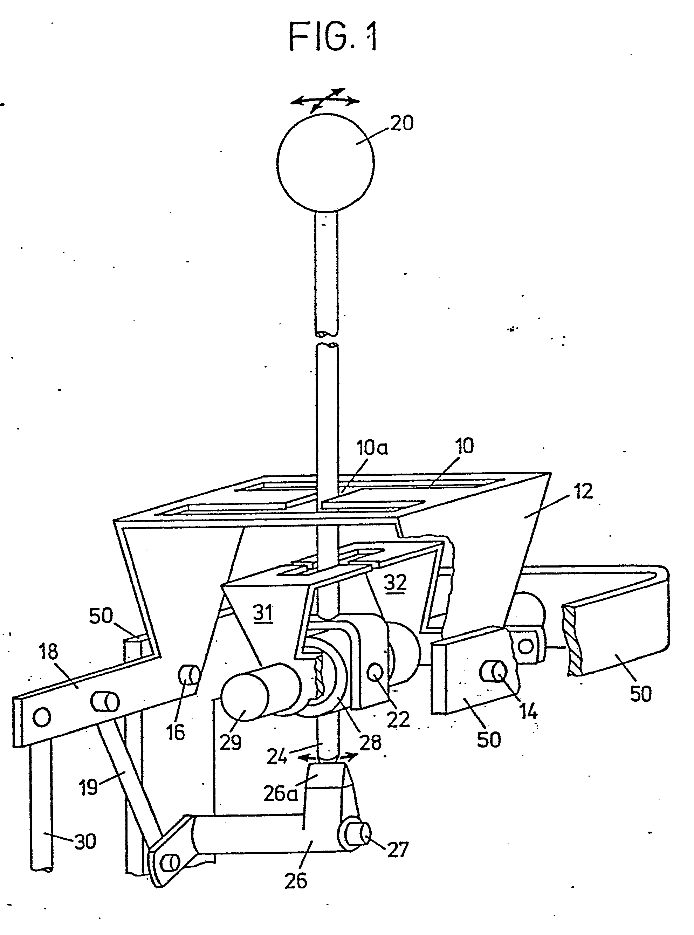

In Fig. 1 ist die Schaltvorrichtung, insbesondere die Schalthebel- und Schaltbügelanordnung, perspektivisch dargestellt. Der mit 12 bezeichnete Schaltbügel weist im wesentlichen eine U-förmige Gestalt auf, die beiden Schenkel sind nach unten zu den Lagerachsen 14 und 16 hin konisch verjüngt. Das etwa waagrecht verlaufende Oberteil des Schaltbügels 12 weist eine H-förmige Aussparung bzw. Schaltkulisse 10 auf, in welcher der Schalthebel 20 zwangsgeführt ist. Der Schalthebel 20 ist kardanisch gelagert, einmal im Verschwenklager 22, das eine Fluchtlinie mit den Lagerachsen 14 und 16 des Schaltbügels bildet. In dieser Fluchtlinie erfolgt auch durch weiteres Verschwenken die zusätzliche Umschaltfunktion. Weiterhin ist der Schalthebel 20 über das Lagerelement 28, das - wie gezeichnet - z.B. als Lagerbuchse gezeichnet sein kann, um den Lagerbolzen 29 verschwenkbar. Der Lagerbolzen 29 trägt auch die beiden Schaltsegmente 31 und 32. Die Schaltsegmente weisen die übliche, zum Schalthebel 20 hin offene Klauenform auf, so daß der Schalthebel je nachdem in das linke oder rechte Schaltsegment 31, 32 einrasten und diese verschwenken kann, sobald er außerhalb der Neutralposition in die Stufenposition bewegt wird. Die an den Schaltsegmenten angeformten bzw. angebrachten Hebelarme, die ihrerseits wieder mit dem Schaltgestänge verbunden sind, sind nur rum Teil sichtbar. Es kann eine übliche Anordnung benutzt werden. Ebenso ist die kardanische, in zwei Richtungen bewegliche Lagerung eines solchen Schalthebels bekannt. Sie kann in der gezeichneten oder einer anderen Form erfolgen. Der Lagerbolzen 29 kann in den beiden sich gegenüberliegenden Seiten des als Viereck ausgebildeten Halterahmens 50 befestigt sein und die Lagerachsen 14 und 16 an den beiden anderen sich gegenüberliegenden Seiten. Dieser Halterahmen 50 ist aufgebrochen gezeichnet, um den Blick freizugeben auf den dahinter liegenden einen Hebelarm des Schaltsegmentes 32. Das zugehörige Schaltgestänge ist nicht gezeichnet. Weiterhin ist der vordere Schenkel des Schaltbügels 12 aufgebrochen gezeichnet, um den Blick auf die beiden Schaltsegmente 31 und 32 freizugeben. Der Halterahmen 50 ist dann im vorderen Bereich nochmals unterbrochen gezeichnet, um nicht nur die kardanische Lagerung des Schalthebels 20, sondern auch die Sperrglieder darstellen zu können, welche ein Bewirken der zusätzlichen Umschaltfunktion durch Verschwenken des Schalthebels 20 einschließlich Schaltbügels 12 in Neutralposition verhindern. Hierzu ist unterhalb des Verschwenklagers 22 ein nach oben weisendes bolzenförmiges Sperrelement 26 parallel zur Richtung des H-Quersteges 10a im Lager 27 gelagert. Der Lagerbolzen 27 für das Sperrelement 26 kann z.B. in einer Verlängerung des Halterahmens 50 nach unten verankert sein. Das Sperrelement 26 ist in Abhängigkeit von dem Schaltbügel 12 verschwenkbar, indem es über eine Lasche 19 mit dem Hebelarm 18 verbunden ist. Diesem Sperrelement ist ein Gegenbolzen 24 zugeordnet, der seinerseits am Lagerelement 28 befestigt ist. Form und Anordnung der beiden Sperrglieder 24, 26 sind so dimensioniert, daß in Neutralstellung des Schalthebels 20 ein Verschwenken des Schaltbügels 12 blockiert ist, da der Gegenbolzen 24 entweder seitlich rechts oder links vom Kopf 26a des Sperrelementes zu liegen kommt. Außerhalb der Neutralstellung schwenkt der Gegenbolzen 24 am Sperrelementkopf 26a vorbei, so daß in jeder Stufenstellung ein Verschwenken des Schaltbügels möglich wird.

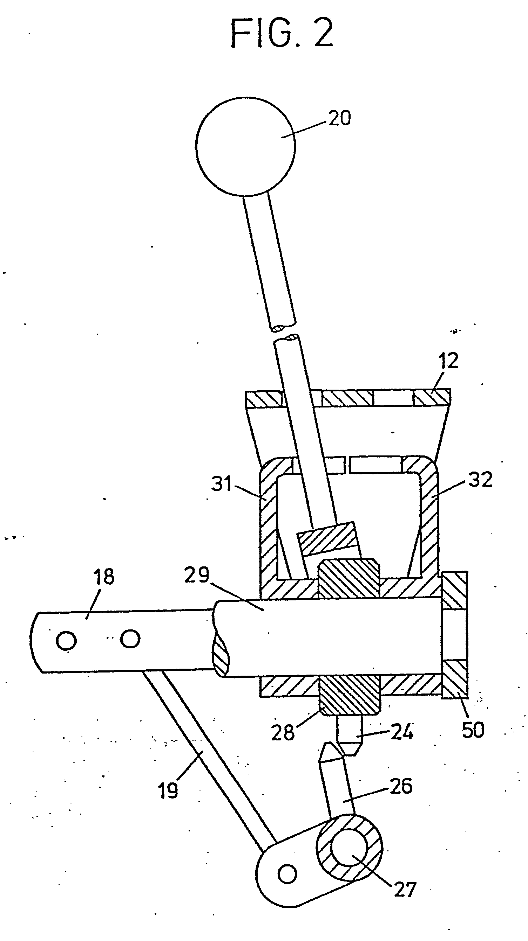

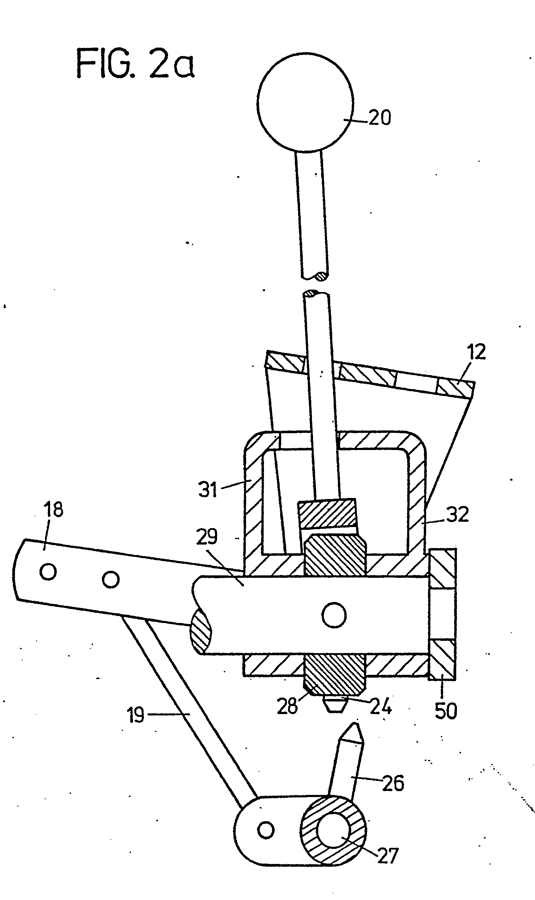

Die Funktion des Sperrelementes 26 wird in Verbindung mit Fig. 2 und 2a noch deutlicher.

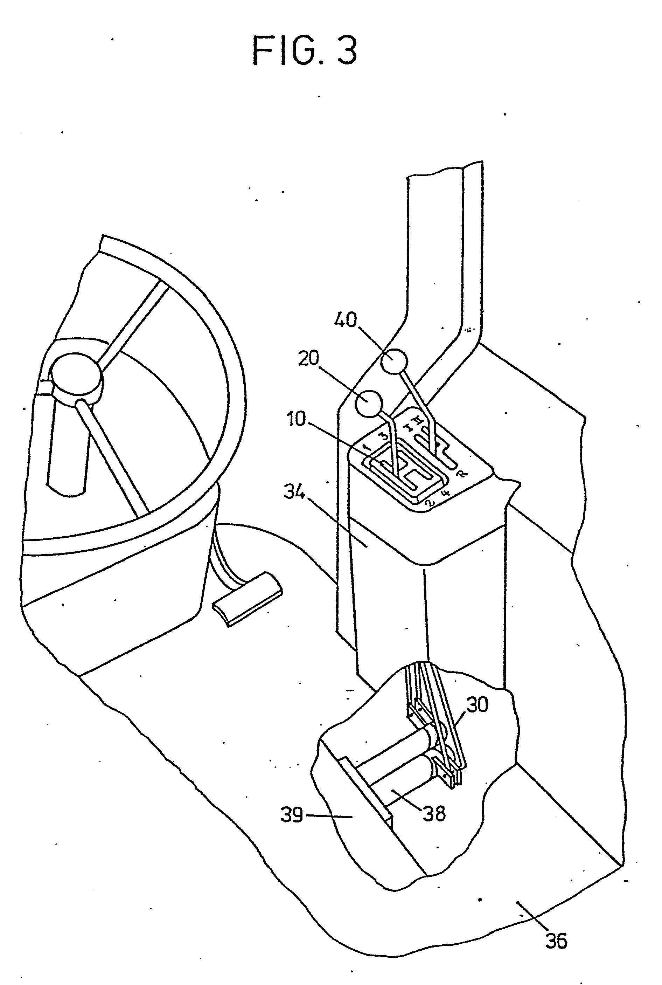

In Fig. 2 ist die in Fig. 1 gezeigte Ausführungsform als senkrechter Schnitt dargestellt, wobei in der Mittelebene des Lagerbolzens 29 geschnitten ist und die Sicht von der Frontseite her nach hinten erfolgt. Soll der Schalthebel 20 nun in die Stufe "3" bewegt werden (vgl. Fig. 3), so geschieht folgendes: Der Schalthebel 20 wird zunächst aus der in Fig. 1 gezeigten Neutralposition vom Fahrer weg verschwenkt um das Verschwenklager 22, ohne daß zunächst der Gegenbolzen 24 seine Lage ändert. Diese Stellung ist in Fig. 2 gezeigt.

Nun wird der Schalthebel 20 nach vorne in Schaltposition "3" gebracht, wobei der Gegenbolzen 24 im Falle der Fig. 1 seitlich am Sperrelement 26 vorbeischwenkt. Im Falle der Fig. 2 schwenkt er in die Bildebene hinein. In dieser Position "3" kann nun, wie auch in den Positionen "1", "2" und "4", die zusätzliche Umschaltfunktion schnell/langsam bewirkt werden unter Verschwenkung des Schaltbügels 12 nach rechts oder linksi wie in Fig. 2a dargestellt (die Richtungsangaben erfolgen jeweils in bezug auf die Sicht nach hinten). Normalerweise wird man den Schaltbügel so anordnen, daß er im Falle der einen zusätzlichen Umschaltfunktion, z.B. "langsam", sich - wie gezeigt - in der waagrechten Lage befindet, im Falle der anderen Umschaltfunktion, z.B. "schnell" schräg nach rechts (zum Fahrer hin) aus der waagrechten Position geschwenkt ist. Dies bedeutet, daß das Sperrelement 26 über Hebelarm 18 und Lasche 19 diese Bewegung mitmacht, derart, daß in Neutralstellung das Sperrelement 26 entweder links oder rechts vom Gegenbolzen 24 befindlich ist.

In Fig. 2a ist die Lage nach erfolgter Verschwenkung nach rechts im Bild dargestellt. Der Schalthebel 20 bleibt in Stufe "3", das Lastschaltgetriebe wird über den Kniehebel 18 euf "schnell" geschaltet. Der Gegenbolzen 24 ist dabei unterhalb der Bildebene befindlich, so daß beim Verschwenken von "langsam" nach "schnell" das Sperrelement 26 die Bewegungen nach rechts (wiederum bezogen auf das Bild bzw. die Sicht nach hinten) mitmachen kann.

Fig. 3 soll einen Eindruck von der Verdungs- und Einbaumöglichkeit der Schaltvorrichtung nach der Erfindung geben. Die gewählte Darstellung entspricht einem Blick in die offene oder geschlossene Führerkabine, z.B. eines Ackerschleppers. Der Schalthebel 20 ist in Übereinstimmung mit dem in den Fig. 1 und 2 gezeigten Ausführungsbeispiel wiederum für vier Schaltstufen ausgelegt, die Schaltkulisse also Hförmig. Dieser Schalthebel oder Schaltstufenhebel 20 ist kombiniert mit einem Bereichsschalthebel oder Gruppenschalthebel 40, der in einer h-förmigen Schaltkulisse, die feststehend angeordnet ist, geführt ist. Im Falle des gezeigten Beispieles sind drei Gruppen vorgesehen, zwei verschieden schnelle Vorwärtsgruppen, eine Rückwärtsgruppe. Insgesamt ergeben sich damit 2 x 4 = 8 Vorwärtsgänge und 1 x 4 Rückwärtsgänge. Sofern die durch Verschwenkung des Schaltbügels bzw. der Schaltkulisse 10 bewirkbare zusätzliche Umschaltfunktion gemäß Ausführungsbeispiel nach den Fig. 1 und 2 eine auf das Planetengetriebe wirkende Schnell-Langsam-Funktion ist, ergeben sich gemäß Beispiel der Fig. 3 dann insgesamt sechzehn Vorwärtsgänge und acht Rückwärtsgänge.

Die wandnahe Verkleidung 34 ist stellenweise aufge= brochen, um einen Durchblick auf das teilweise mit 30 bezeichnete Schaltgestänge freizugeben, das seinerseits wieder auf die unterhalb der Fahrerplattform 36 rechts seitlich aus dem Getriebegehäuse 39 herausgeführten Schaltwellen 38 einwirkt. Die vier Stufen sind in bekannter Weise durch je zwei konzentrisch angeordnete Doppelwellen realisiert. Nicht gezeigt ist das Gestänge für die zusätzliche Umschaltfunktion, das z.B. auf die Hydraulikventile eines unter Last hydraulisch schaltbaren Planetengetriebes einwirkt.

Die dargestellte Schaltungseinrichtung integriert also in das bekannte 4-Gang-H-Schaltungsprinzip die Schaltung für ein vorgeschaltetes Lastschaltgetriebe durch eine Schaltbewegung, die quer zur normalen Schaltrichtung liegt. Damit wird die für diese Getriebebauform erforderliche Anzahl der Bedienungshebel von drei auf zwei reduziert, die übersichtlich nebeneinander im für den Fahrer günstigen Griffbereich rechts platzsparend angeordnet sind.

Im praktischen Betrieb wird vom Fahrer im Stillstand einer der Geschwindigkeitsbereiche I, II oder R eingeschaltet und der zum Anfahren gewünschte Gang eingelegt. Während der Fahrt besteht dann die Möglichkeit, je nach Betriebsbedingungen, insgesamt acht Gänge zu schalten, wobei vier Gänge wie beim PKW nach dem H-Schaltungsprinzip geschaltet werden und durch eine zusätzliche Querbewegung des Schalthebels vier Gangzwischenstufen gewählt werden können.

## Patentansprüche

1. Schaltvorrichtung für den Antrieb eines Nutzfahrzeuges, insbesondere eines Ackerschleppers, mit einem in zwei Richtungen verstellbaren Schalthebel (20), der in einer Schaltkulisse (10) geführt ist und bei Verstellung in der einen Richtung ein Mehrstufengetriebe und bei Verstellung aus der dadurch erreichten Schaltstellung in die andere Richtung ein weiteres Getriebe umschaltet, dadurch gekennzeichnet, daß ein schwenkbar angeordneter Schaltbügel (12) vorgesehen ist, der mit dem weiteren Getriebe derart verbunden ist, daß bei Verschwenken des Schaltbügels (12) das weitere Getriebe umgeschaltet wird, ferner daß der Schaltbügel (12) die Schaltkulisse (10) aufweist, die dem Schaltweg des Mehrstufengetriebes entspricht, und in allen Schaltstellungen des Mehrstufengetriebes über den Schalthebel (20) verschwenkbar ist.

2. Schaltvorrichtung nach Anspruch 1 für ein aus seinen Schaltstellungen in eine Neutralstellung, d. h. in eine den Kraftfluß unterbrechende Stellung, verstellbares Mehrstufengetriebe, dadurch gekennzeichnet, daß Sperrelemente (24 und 26) vorgesehen sind, über die in der Neutralstellung des Mehrstufengetriebes eine Umschaltung des weiteren Getriebes blockierbar ist.

3. Schaltvorrichtung nach Anspruch 1 oder 2 mit Schaltsegmenten (31, 32) zum Schalten des Mehrstufengetriebes, dadurch gekennzeichnet, daß die Schaltsegmente (31, 32) des Mehrstufengetriebes eine Schlitzung aufweist, die der Schwenkbewegung des Schaltbügels (12) zum Umschalten des weiteren Getriebes entspricht.

4. Schaltvorrichtung nach einem oder mehreren der vorhergehenden Ansprüche, dadurch gekennzeichnet, daß der Schaltbügel (12) etwa U-förmige Gestalt hat und in seinem etwa waagrecht verlaufenden oberen Steg die Schaltkulisse (10) aufweist und nach unten weisende Schenkel in Lagerachsen (14, 16) verschwenkbar gelagert sind.

5. Schaltvorrichtung nach Anspruch 4 dadurch gekennzeichnet, daß der Schalthebel (20) in einem Verschwenklager (22) angeordnet ist und die Lagerachsen (14, 16) des Schaltbügels (12) mit dem Verschwenklager (22) eine gemeinsame Fluchtlinie aufweisen.

6 Schaltvorrichtung nach Anspruch 4 oder 5 dadurch gekennzeichnet, daß einer der nach unten weisenden Schenkel des Schaltbügels (12) einen sich sestlich und quer zur Lagerachse (14, 16) erstreckenden Hebelarm (18) aufweist, der mit einem sich beim Verschwenken nach oben oder unten mitbewegenden Schaltgestänge (30) verbunden ist, über das das weitere Getsebe schaltbar ist.

7. Schaltvorrichtung nach Anspruch 5 oder 6 dadurch gekennzeichnet, daß in senkrechtem Abstand unterhalb des Verschwenklagers (22) des Schalthebels (20) die Sperrelemente (24 und 26) vorgesehen sind, die ein nach oben weisendes vorzugsweise bolzenförmiges Sperrelement (26) aufweisen, das in einem Lager (27) gelagert ist und in Abhängigkest von der Stellung des Schaltbügels (12) verschwenkbar ist und sn der Neutralstellung gegen esnen Gegenbolzen (24) anliegt, der mit dem Schalthebel (20) im Bereich seines Verschwenklagers (22) parallel zur gemeinsamen Fluchtlinie verschwenkbar ist.

8. Schaltvorrichtung nach Anspruch 6 oder 7 dadurch gekennzeichnet, daß zwecks Verschwenken des Sperrelementes (26) dieses mittels einer Lasche (19) mit dem Hebelarm (18) verbunden ist.

## Claims

1. A shift arrangement for the drive of a utility vehicle, in particular an agricultural tractor, comprising a shift lever (20) which is displaceable in two directions and which is guided in a shift gate (10) and which upon movement in one direction changes a multispeed transmission and upon movement out of the resulting shift position in the other direction changes a further transmission, characterised in that there is provided a pivotally disposed shift stirrup (12) which is connected to the further transmission in such a way that upon pivotal movement of the shift stirrup (12) the further transmission is shifted, further that the shift stirrup (12) has the shift gate (10) which corresponds to the shift motion of the multi-speed transmission, and is pivotable in all shift positions of the multi-speed transmission by way of the shift lever (20).

2. A shift arrangement according to claim 1 for a multi-speed transmission which is movable from its shift positions into a neutral position, that is to say a position in which the flow of force is interrupted, characterised in that locking elements (24 and 26) are provided, by way of which shifting of the further transmission can be blocked in the neutral position of the multi-speed transmission.

3. A shift arrangement according to claim 1 or claim 2 comprising shift segments (31, 32) for shifting of the multi-speed transmission, characterised in that the shift segments (31, 32) of the multi-speed transmission have a slot means corresponding to the pivotal movement of the shift stirrup (12) for shifting the further transmission.

4. A shift arrangement according to one or more of the preceding claims characterised in that the shift stirrup (12) is of substantially U-shaped configuration and has the shift gate (10) in its substantially horizontally extending upper linb portion, and downwardly pointing limb portions are mounted pivotably in mounting spindles (14, 16).

5. A shift arrangement according to claim 4 characterised in that the shift lever (20) is arranged in a pivot mounting (22) and. the mounting spindles (14, 16) of the shift stirrup (12) have a common line of alignnent with the pivot mounting (22).

6. A shift arrangement according to claim 4 or claim 5 characterised in that one of the downwardly pointing limbs of the shift stirrup (12) has a lever arm (18) which extends laterally and transversely with respect to the mounting axis (14, 15) and which is connected to a shift linkage (30) for shifting of the further transmission, the shift linkage moving with the lever arm upon pivotal movement in an upward or downward direction.

7. A shift arrangement according to claim 5 or claim 6 characterised in that disposed at a spacing and perpendicularly below the pivot mounting (22) of the shift lever (20) are the locking elements (24 and 26) which have an upwardly pointing, preferably pin-like locking element (26) which is journalled in a mounting (27) and which is pivotable in dependence on the position of the shift stirrup (12) and which in the neutral position bears against a co-operating pin (24) which is pivotable with the shift lever (20) in the region of its pivot mounting (22) parallel to the common line of alignment.

8. A shift arrangement according to claim 6 or claim 7 characterised in that for the purposes of pivotal movement of the locking element (26), the locking element is connected to the lever arm (18) by means of a bar (19).

**Revendications**

1.- Dispositif de commande de changement de vitesse pour la transmission d'un véhicule utilitaire, en particulier d'un tracteur agricole, comportant un, levier de changement de vitesse (20) déplaçable dans deux directions, qui est guidé dans une grille de changement de vitesse (10) et qui, lors d'un déplacement dans l'autre direction à partir de commande un mécanisme fournissant plusieurs rapports et, lors d'un déplacement dans l'autre direction à partir de la position de sélection de vitesse alors atteinte, commande un autre mécanisme, caractérisé en ce qu'il est prévu un étrier de commande (12) monté de façon pivotante, qui est relié à l'autre mécanisme de telle sorte que, lors du pivotement du levier de changement de vitesse (12), l'autre mécanisme subisse une commande ou une inversion, et en outre en ce que l'étrier de commande (12) présente la grille de changement de vitesse (10) qui correspond au trajet de passage des vitesses du mécanisme fournissant plusieurs rapports et peut être déplacé par pivotement dans toutes les positions d'engagement d'un rapport du mécanisme fournissant plusieurs rapports, par l'intermédiaire du levier de changement de vitesse (20).

2.- Dispositif de commande de changement de vitesse suivant la revendication 1 pour mécanisme fournissant plusieurs rapports pouvant être amené de ses positions d'engagement d'un rapport dans une position de point mort, c'est-à-dire dans une position interrompant la transmission de l'énergie, caractérisé en ce que des éléments de verrouillage (24 et 26) sont prévus, par lesquels une inversion ou commande de l'autre mécanisme peut être empêchée dans la position de point mort du mécanisme fournissant plusieurs rapports.

3.- Dispositif de commande de changement de vitesse suivant la revendication 1 ou 2, comportant des secteurs de commande (31, 32) pour la commande du mécanisme fournissant plusieurs rapports, carectérisé en ce que les secteurs de commande (31, 32) du mécanisme fournissant plusieurs rapports comportent un système de fentes qui correspond au mouvement de pivotement de l'étrier de commande (12) pour la commande ou l'inversion de l'autre mécanisme.

4.- Dispositif de commande de changement de vitesse suivant une ou plusieurs des revendications précédentes, caractérisé en ce que l'étrier de commande (12) a uné conformation sensiblement en U et comporte la grille de changement de vitesse (10) dans sa branche supérieure s'étendant sensiblement horizontalement, ses branches orientées vers le bas étant montées de façon pivotante dans des axes de portée (14, 16).

5.- Dispositif de commande de changement de vitesse suivant la revendication 4, caractérisé en ce que le levier de changement de vitesse (20) est monté dans un palier de pivotement (22) et en ce que les axes de portée (14, 16) de l'étrier de commande (12) présentent avec le palier de pivotement (22) un axe d'alignement commun.

6.- Dispositif de commande de changement de vitesse suivant la revendication 4 ou 5, caractérisé en ce que l'une des branches orientées vers le bas de l'étrier de commande (12) comporte un bra de levier (18) s'étendant latéralement et transversalement aux axes de portée (14, 16) ce bras de levier étant relié à une tringlerie de commande (30) se déplaçant avec lui vers le haut ou versle bas lors du pivotement et par laquelle l'autre mécanisme peut être commandé.

7.- Dispositif de commande de changement de vitesse suivant la revendication 5 ou 6, caractérisé en ce qu'il est prévu, à une certaine distance verticale au-dessous du palier de pivotement (22) du levier de changméent de vitesse (20), les éléments de verrouillage (24 et 26) qui comporten un élément de verrouillage (26) de préférence en forme de doigt orienté vers le haut, qui est monté dans un palier (27) et qui peut pivoter en fonction de la position de l'étrier de commande (12), et qui s'applique dans la position de point mort contre un doigt conjugué (24) qui peut pivoter avec le levier de changement de vitesse (20) au voisinage de son palier de pivotement (22) parallélement à l'axe d'alignement commun.

8.- Dispositif de commande de changement de vitesse suivant la revendication 6 ou 7, caractérisé en ce que, pour assurer le pivotement de l'élément de verrouillage (26), celui-ci est relié au moyen d'une patte (19) au brat de levier (18).

# FIG. 1

# FIG. 2

FIG. 2a

# FIG. 3